Europäisches Patentamt

European Patent Office

Office européen des brevets

(11) Publication number: **0 159 648**
**B1**

# (12) EUROPEAN PATENT SPECIFICATION

(45) Date of publication of patent specification: **09.08.89**

(51) Int. Cl.⁴: **G 01 N 15/02**

(21) Application number: **85104543.5**

(22) Date of filing: **15.04.85**

(54) A device for the separation of airborne particles into grain size classes.

(30) Priority: **19.04.84 IT 343184**

(73) Proprietor: **Prodi, Vittorio**
**Via Martinelli, 7**
**I-40137 Bologna (IT)**

(43) Date of publication of application:
**30.10.85 Bulletin 85/44**

(72) Inventor: **Prodi, Vittorio**
**Via Martinelli, 7**
**I-40137 Bologna (IT)**

(45) Publication of the grant of the patent:
**09.08.89 Bulletin 89/32**

(74) Representative: **Bongiovanni, Guido et al**
**c/o Ingg. Carlo e Mario Torta Via Viotti 9**
**I-10121 Torino (IT)**

(84) Designated Contracting States:
**DE FR GB NL**

(56) References cited:
**FR-A-2 216 577**
**FR-A-2 398 299**
**US-A-3 693 457**

**JOURNAL OF AEROSOL SCIENCE, vol. 101,
1979, pages 411-419, Pergamon Press Ltd., GB;
V. PRODI et al.: "An inertial spectrometer for
aerosol particles"**

Courier Press, Leamington Spa, England.

**Description**

The present invention relates to a device for the separation of airborne particles, such as those in an aerosol, into grain size classes.

Devices of the above indicated type are instruments which separate the particles still in suspension into grain size classes and collect them, whilst maintaining the separation, on a filter. It is then possible to perform a series of chemical and physico-chemical analyses on the deposited particles in dependence on the dimensions of these for the purpose of determining the risk resulting from inhalation of dust in the environment in which they are present. The said devices are therefore utilised in the testing of environmental and industrial health, in medical physics and in powder technology generally. In the Journal of Aerosol Science, Vol. 101, 1979 pages 411—419 Pergamon Press Ltd., GB., is described a device for the separation of airborne particles into grain size classes, which comprises an upper body in which is formed a substantially L-shaped channel defining a first cavity whose axis is vertical and a second cavity which is formed in the lower surface of the first body and a second body having an upper surface facing and in contact with the lower surface of the first body.

In the second body there is formed a third cavity in correspondence with the second cavity and between the former and latter cavity there is interposed a filter which is supported by a plate made of porous metal; means to create a pressure in the third cavity lower than that existing in the channel are provided. The devices comprises further a nozzle connected to a source of particle-bearing air and operable to inject a quantity of such particle-bearing air into said first cavity close to the second cavity.

Due to the sharp change of the direction of the flow coming from the first vertical cavity and going into the second cavity, the particles are separated according to their size in various streams each of which is composed of particles of the same diameter; such streams are subsequently deposited on filters starting from the stream with the particles of greater diameter.

The devices described above have various serious disadvantages.

In particular, since the filter rests on the above mentioned plate made of porous metal and since it is difficult to work this plate and obtain it perfectly flat, there is generated an air space between the plate and the body of different thickness which prejudices the correct operation of the device, and it can happen that an irregular deposition of the particles of the aerosol takes place. In fact, for a correct operation of the device, it is necessary that the channel delimited by the plate and by the said first body should have a constant height.

It is also necessary to note that setting up of the plate onto the second body is manual and this can involve difficulty and positioning errors of this plate. Finally, the fact that the material of which the plate is made has characteristics of elasticity can involve buckling of this towards the interior of the third cavity of the second body because of the pressure difference existing between the second and third cavity.

Devices for separating airborne particles, in particular particles of an aerosol, into classes by grain size and operating on the ground of the technique of intertial separation are described in the European Patent application of the Applicant n° 85 104 540, (EP—A—159646) 85 104541 (EP—A—159002) and 85 104542 (EP—A—159647).

The object of the present invention is to provide a device for the separation of airborne particles into grain size classes which will be free from the above mentioned disadvantages and which will comprise a support plate the upper surface of which, delimiting the channel, will be perfectly flat and for which there will be no setting up operations necessary.

Other objects and advantages of the present invention will become apparent from the following description.

According to the present invention there is provided a device for the separation of airborne particles into grain size classes, comprising a first body in which is formed a substantially L-shaped channel having a first part defined by a first cavity and a second part of the channel defined by a second cavity formed on the lower surface of the said first body, said first cavity having a substantially rectangular cross-section, two opposite sides of which are being of decreasing length from the top downwardly; a second body having an upper surface facing and in contact with the lower surface of the said first body; a third cavity formed in the said second body in correspondence with the said second cavity and means to create a pressure lower than that existing in the said channel; a nozzle connected to a source of particle-bearing air and operable to inject a quantity of such particle-bearing air into the said first cavity close to the second cavity, said nozzle having a substantially rectangular cross-section; and characterized by the fact that it comprises a rectangular plate fixed preferably by means of an adhesive onto the edge of the said third cavity and operable to delimit the lower part of the said second cavity, there being formed on the said plate a plurality of through slots the upper surface of which is flat, said slots having their longitudinal axes parallel to one another and orthogonal to the longitudinal axis of the first cavity in such a way that the fluid at the output of the said first part of the said channel meets a whole slot at a time. For a better understanding of the present invention a preferred embodiment will now be described, purely by way of non limitative example, with reference to the attached drawings, in which:

Figure 1 is a section of a device for the separation of airborne particles into grain size classes;

Figures 2 and 3 are, respectively, a plan view and a section of a detail of the device of Figure 1;

Figure 4 is a side view of a second detail of the device of Figure 1;

Figure 5 is a front view of the detail of Figure 4 from which one component has been removed; and

Figure 6 is a view on an enlarged scale of a third detail of the device of Figure 1.

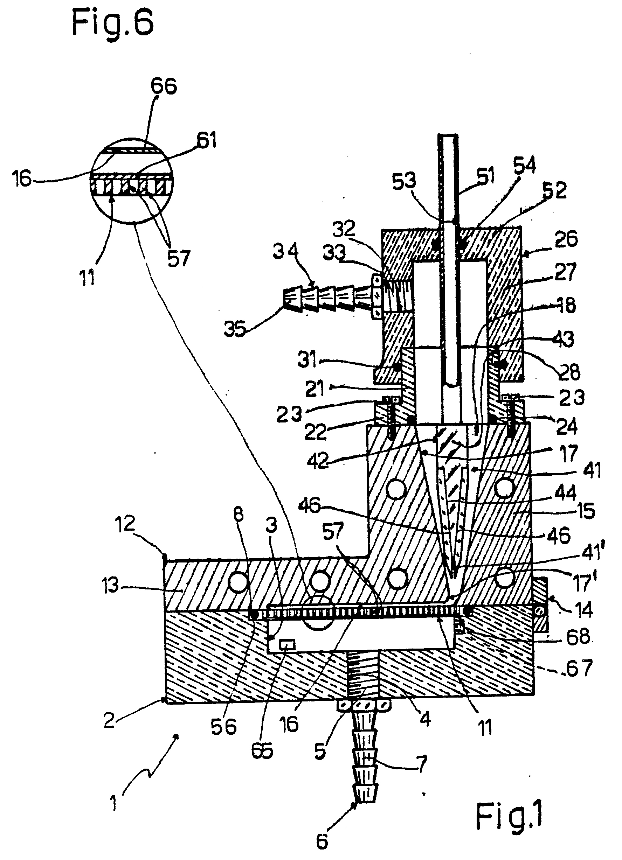

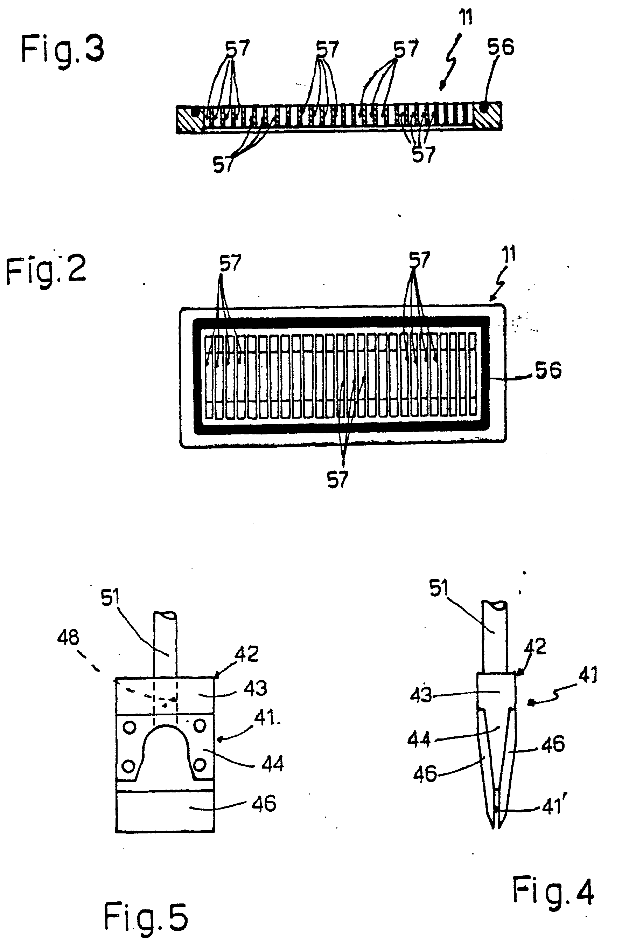

As illustrated in Figure 1, the reference numeral 1 indicates as a whole a device for the separation of airborne particles such as particles of an aerosol into grain size classes. The device 1 comprises a base body 2 of substantially prismatic form and in which, in correspondence with its upper face, there is formed a cavity 3 also of prismatic form. In the central part of the base surface of the cavity 3 there is formed a threaded through hole 4 into which is screwed the upper part 5 of a pipe union 6 having a lower part 7 projecting from the hole 4 at the lower face of the body 2. In the upper edge of the cavity 3 there is formed a recess 8 on the lower surface of which there is fixed a plate 11 which will be described hereinbelow with reference to Figures 2 and 3. On the base body 2 rests an upper body 12 which in section has a substantially L-shaped configuration having a substantially prismatic lower portion 13 the lower face of which faces the upper face of the body 2. The body 12 is pivoted, by means of a pivot 14, at a lateral face of the portion 13 to a lateral face of the body 2. The body 12 further includes a prismatic portion 15 which extends upwardly from a lateral zone of the upper face of the portion 13. On the lower face of this latter there is formed a shallow prismatic cavity 16 facing the cavity 3 of the body 2. Along the longitudinal axis of the portion 15 there is formed a through cavity 17. This latter has a section with rectangular outline but with two opposite sides the length of which decreases gradually in progressing from the top towards the bottom. The cavity 17 communicates with the cavity 16 close to the lower face of the portion 13. The cavities 16 and 17 thus define a channel 18 having an L-shape configuration and the inner surfaces of which relating to the passage between them are rounded in such a way as to join the mouth of the cavity 17 into the cavity 16.

As will be seen better below the cavity 17 constitutes a nozzle through which a quantity of filtered air coming from an external source is ejected into the cavity 16. For a better understanding the part of the channel 18 relating to the passage of the filtered air between the cavities 17 and 16 will be called the "mouth" hereinbelow and indicated with the reference numeral 17'. At the upper end of the portion 15 there is fixed, coaxially thereto, a sleeve 21 communicating internally with the channel 18. In detail, the sleeve 21 has a flange 22 at its lower end fixed by means of screws 23 to the upper end of the portion 15. Between this and the flange 22 there is formed a seat for housing a sealing ring 24. On the sleeve 21 there is fixed a plug 26 of substantially cup-shape configuration with the internal cavity facing downwardly. The plug 26 has a recess 28 along the inner surface of its lateral part 27, which can be engaged by the upper end of the sleeve 21.

Within the interior of the recess 28 there is formed a seat for a sealing ring 31. On the lateral part 27 of the plug 26 there is formed a threaded hole 32 into which is screwed a threaded portion 33 of a pipe union 34 a second portion 35 of which is external to the plug 26 and is connectible by means of a duct (not illustrated) with the said source of filtered air.

As illustrated in Figures 1, 4 and 5, the device 1 includes a second nozzle 41 positioned in correspondence with the cavity 17. In use, by means of the nozzle 41, a quantity of aerosol is ejected into the channel 18 and, more precisely, into the cavity 17 close to the mouth 17'. The nozzle 41 comprises a central portion 42 having an upper part 43 constituted by a small prismatic plate and a lower part 44 constituted by a plate of thickness decreasing from the top towards the bottom and of substantially U-shape configuration with the concavity facing downwardly (Figure 5). On the central portion 42 and more precisely on the lower part 44 there are fixed, for example by means of screws, a respective blade 46 on each of its faces of greater extent. The blades 46 extend beyond the lower end of the part 44 and delimit laterally the inner recess of the part 44. The lower ends of the blades 46 are substantially parallel to one another and define an outlet 41' of the nozzle 41. It is to be noted that the longitudinal axis of the nozzle 41 is parallel to that of the cavity 17 and moreover is displaced towards the zone of the portion 13 in which the cavity 16 is formed in such a way that the outlet 41' of the nozzle 41 is closer to one inner wall of the cavity 17 rather than in an intermediate position. On the upper part 43 of the portion 42 there is formed a through hole 48 illustrated in broken outline in Figure 5 and coaxial with the longitudinal axis of the nozzle 41. The hole 48 in particular communicates with the recess defined by the U-shape conformation of the lower part 44. From the upper part 43 in correspondence with the hole 48 and therefore communicating internally therewith there extends upwardly a duct 51 which internally traverses the sleeve 21 and the plant 26 and which extends beyond the upper part 52 of the plug 26 through a through hole 53 formed therein. In the hole 53 there is formed a seat for housing a sealing ring 54. The duct 51 is connected to a source of aerosol which in use could be the environment itself.

As illustrated in Figures 1, 2 and 3 the plate 11 is of rectangular outline and has around its edge a seating for a sealing ring 56. This latter cooperates with the lower face of the portion 13 and, more precisely, with the zone of this face which delimits the cavity 16, in such a way as to avoid unwanted escape of filtered air and aerosol. In the plate 11 there are a plurality of through slots 57 aligned with one another in such a way as to have their longitudinal axes parallel to one another and parallel to the smaller side of the geometric figure representing the plate 11 itself. The mouth 17' of the cavity 17 is disposed in correspondence with this smaller side in such a way that the fluid composed of filtered air and aerosol which is ejected into the cavity 16, delimited below by the plate 11, encounters one slit 57 at a time. The slits 57 are obtained by means of milling operations which allows bodies such as the plate 11 even of very small thickness to be worked. It is, moreover, to be noted that with such working it is possible to arrange that the solid part of the plate 11 between two adjacent slots 57 is of very small thickness. Naturally, for this type of work, the openings of the slots 57 have a section which is decreasing from the top downwardly. In use, after the milling operations, the plate 11, or rather its edge, is secured by adhesive to the surfaces which define the recess 8. Subsequently the plate 11 is ground, that is to say the upper surface of the plate 11 is made flat and coplanar with the upper surface of the body 2 which is also ground either previously or during the grinding operations on the plate 11.

As illustrated in Figures 1 and 6, on the upper surface of the plate 11 there is arranged a filter 61 on the upper surface of which, in use, the particles present in the aerosol become deposited. The filter 61 is rectangular and covers the whole of the part of the plate 11 in which the slots 57 are formed. The filter 61 is preferably of the membrane type utilising a porous material such as cellulose or teflon.

The assembly and setting up of the device 1 as already partly described are easy to perform.

In particular, after the milling operations for the formation of the slots 57, the plate 11 is secured by adhesive onto the body 2. Subsequently, the upper surface of the plate 11 is ground and the filter 61 is positioned on it. Once the operation of the device 1 has been completed it is possible to extract the filter 61 which occupies a portion of the cavity 16, simply by making the body 12 turn in a clockwise sense about the edge of the body 2 where the hinge 14 is fitted.

The operation of the device 1 takes place in the following way.

In detail, a constant quantity of filtered air is channelled into the cavity 17 from a suitable source, and from a second source, which could be the environment itself, a constant quantity of aerosol is injected, via the nozzle 41, into the cavity 17 in correspondence with the mouth 17'. This is possible, for example, by connecting the pipe union 6 and therefore the interior of the cavity 3 to a pump able to create a depression in the cavity 3 which draws in the filtered air and the aerosol. As is known, an aerosol is, for example, air in which there are present particles in suspension. The fluid constituted by the filtered air and the aerosol subsequently enters the cavity 16. Since this fluid, in order to arrive at the cavity 16, must traverse a tight curvature (the mouth 17') it happens that the particles of dust present in the aerosol are separated in this according to the aerodynamic diameter into various bands of fluid, that is to say, all the particles of the same grain size class will be present along a fluid band. At the output of the mouth 17' the particles begin to be deposited on the filter 61 starting from the particles of greater diameter. The fluid, cleaned of particles, will first enter into the cavity 3 and subsequently will flow out of the device 1 through the pipe union 6 towards the said pump. On the filter 61 there is therefore obtained a deposit which is differentiated in dependence on the grain size class to which the particles belong. In particular, the particles of greater diameter will be deposited on the portion of the filter 61 closest to the mouth 17'. It is to be noted that the dust particles will deposit only in those portions of the filter 61 positioned in correspondence with the slits 57 and not over the whole of the filter 61, that is to say, the portions of the filter 61 positioned in correspondence with the solid parts of the plate 11 between two adjacent slots 57 will be excluded from deposits. It is therefore possible to subdivide the filter 61, after removal, into various parts corresponding to the slits 57, and to make this sub-division it is only necessary simply to cut the filter 61 in correspondence with those parts thereof positioned in correspondence with the solid parts of the plate 11 and subsequently to cut the side parts of the filter 61 which are not usable due to the perturbing effect of the lateral walls of the cavity 16.

The technique for the separation of the dust particles into grain size classes is known and described in various scientific publications some of which have been written by the inventor of the device 1. It lies in the fact that the particles traversing the curved part (the mouth 17') of the channel 18, tend by inertia to maintain their velocity in direction and sense but are drawn by the flow of fluid. The particles therefore separate into initial fluid bands upon leaving the nozzle 41, the separation of which is a function only of the aerodynamic diameter. The separation between particles of different diameters is, however, small at the output of the curved part (the mouth 17') of the channel 18. This does not allow a sufficient exploitation of this separation to enable even a minimum of information to be obtained. With the device 1, the separation between the particles of different diameter is, on the other hand, amplified since it makes use of a projection onto a wall (filter 61) downstream of the curvature of the channel 18, through which the fluid is drawn and filtered. The filter 61 therefore collects all the particles in different positions according to their aerodynamic diameters. The particles of smaller diameter are collected in those parts of the filter 61 furthest from the mouth 17' and the information pertinent to them does not become lost as happened in similar devices to that of the subject of the present invention. It is to be noted, finally, that for a correct operation of the device 1, that is to say to obtain a greater separation of the particles into the various grain size classes, the longitudinal axis of the nozzle 41 is displaced towards the wall of the cavity 17 closest to the part of the portion 13 in which the cavity 16 is formed. This characteristic is determined experimentally and is described in the said publications.

Subsequently to the deposition of the particles the filter 61 is extracted from the device 1 and all the chemical and/or physico-chemical analyses necessary for industrial and environmental health, medical physics and dust technology generally are done. The aerodynamic separation of the particles can be used to study the mass and activity of these particles or else by means of observations through optical or electronic microscopes it is possible to determine the form, density and other characteristics of the particles themselves.

With reference to Figure 1, by utilising the device 1 it is possible to apply the β absorption technique for the determination in real time of the mass of particles deposited on the filter 61. To apply this technique it is sufficient to dispose in the cavity 3 a source 65 of β radiation and in the cavity 16 a detector 66 (Figure 6), for example of the surface barrier diode type. The solid parts of the plate 11 in this case serve as collimators for the radiation emitted from the source 65. This latter could be of dimensions such as to occupy the whole of the length of the cavity 3 or else may be of small dimensions as illustrated in Figure 1 but slidable along the cavity 3.

By utilising the device 1 it is possible to obtain an optical reading for the determination in real time of the quantity of particles in each grain size class. To obtain the optical reading it is necessary to remove the filter 61 and to employ a photometer 67 illustrated in broken outline in Figure 1. The photometer 67 which can be of the laser beam type is lodged in a recess 68 formed in one side face of the cavity 3. Although the filter is not there the plate 11 permits the particles to be separated into grain size classes by maintaining them in suspension. At the outlet of the slots 57 with the photometer 67 it is possible to determine the number of particles for each grain size class. If a second plate 11 is fixed in the cavity 3 in a lower position than that of the plate 11 and the space provided with the photometer 67, on which is positioned a filter similar to the filter 61, it is then possible to analyse the deposit of particles on such filter thus obtaining the maximum information both in real time on the quantity and in a subsequent time on the composition and activity. It is also possible to utilise in this case a filter which is not of the membrane type, but one formed with a material which can support high temperatures such as, for example, glass fibre. With such a filter the use of the device 1 can be extended even into places or environments at high temperatures such as, for example, chimneys.

From what has been explained above the numerous advantages consequent on the arrangement of the present invention will become apparent.

In particular, the plate 11 is secured by adhesive to the body 2 and therefore there are no setting up operations required. As well as the fact that it is fixed, the plate 11 can be ground in such a way as to make its upper surface flat and coplanar with the upper surface of the body 2. This permits the plate 11 to be worked with the mechanical precision required and therefore allows a greater control of it in the constructional phase to be obtained. Moreover, the filter 61 is occluded along the solid parts of the plate 11. This constitutes a reference in cutting the filter 61 for the analyses which are subsequently performed on the deposit. With the device 1 it is possible to use the β absorption technique for the determination in real time of the number of particles deposited. It is further possible, by means of the photometer 67, to obtain an optical reading. Finally, as already described, the device 1 can be utilised even in environments having very high temperatures, with the use of a filter of suitable material.

Finally, it is clear that the device 1 described and illustrated here can be modified and varied without by this departing from the protective scope of the claims.

**Claims**

1. A device for the separation of airborne particles into grain size classes, comprising
a first body (12) in which is formed a substantially L-shaped channel (18) having a first part defined by a first cavity (17) and a second part of the channel (18) defined by a second cavity (16) formed on the lower surface of the said first body (12), said first cavity (17) having a substantially rectangular cross-section, two opposite sides of which being of decreasing length from the top downwardly;
a second body (2) having an upper surface facing and in contact with the lower surface of the said first body (12);
a third cavity (3) formed in the said second body (2) in correspondence with the said second cavity (16) and means to create a pressure lower than that existing in the said channel (18);
a nozzle (41) connected to a source of particle-bearing air and operable to inject a quantity of such particle-bearing air into the said first cavity (17) close to the second cavity (16), said nozzle having a substantially rectangular cross-section;
and characterized by the fact that it comprises:
a rectangular plate (11) fixed preferably by means of an adhesive onto the edge of the said third cavity (3) and operable to delimit the lower part of the said second cavity (16), there being formed on the said plate (11) a plurality of through slots (57) the upper surface of which is flat, said slots (57) having their longitudinal axes parallel to one another and orthogonal to the longitudinal axis of the first cavity (17) in such a way that the fluid at the output of the said first part of the said channel (18) meets a whole slot (57) at a time.

2. A device according to Claim 1, characterised by the fact that the upper surface of the said plate (11) is coplanar with the upper surface of the said second body (2).

3. A device according to one of the preceding Claims, characterised by the fact that the longitudinal axis of the said nozzle (41) is parallel to that of the said first cavity (17) and is close to the lateral wall of this latter nearest to the said second cavity (16).

4. A device according to one of the preceding Claims, characterised by the fact that the said second cavity (6) is a shallow prisma.

5. A device according to one of the preceding Claims, characterised by the fact that the said third cavity (3) is prismatic; the interior of the said third cavity (3) is connected in use to a pump operable to create a depression therein.

6. A device according to one of the preceding Claims, characterised by the fact that the said nozzle 41 includes a central portion (42) having an upper part (43) in which is formed a first through-hole (48) the interior of which is in communication via a duct (51) with the said source of particle-bearing air and a lower part (44) which is substantially U-shape configuration in such a way that the said first hole (48) opens into the cavity defined by the form thereof; on opposite faces of the said lower part (44) there being fixed a respective blade (46) in such a way as to delimit laterally the outlet channel for the particle bearing air.

7. A device according to Claim 8, characterised by the fact that on the first body (12) in correspondence with the upper end of the said first cavity (17) there is fixed a sealing plug (26) having a second hole (53) through which the said duct (51) projects to be connected with the source of particle-bearing air, and a third hole (32) forming a seating for a pipe union (24) operable to put the interior of the said plug (26) and therefore the said first cavity (17) into communication with the source of filtered air.

8. A device according to any one of the preceding Claims, characterised by the fact that the upper surface of the said plate (11) supports a filter (61) on which, in use, the particles are deposited according to their various grain size classes.

9. A device according to Claim 8, characterised by the fact that the said filter (61) is of the membrane type, that is, one formed with a porous material that is, for example, cellulose or tetrafluoroethylene.

10. A device according to Claim 8 and/or Claim 9, characterised by the fact that a source (65) of β radiation is housed within the interior of the said third cavity (3); a detector (66), for example of the surface barrier diode type being located on the upper part of the said second cavity (16) to obtain, in use, a determination in real time of the number of particles which are deposited on the said filter (61).

11. A device according to Claim 10, characterised by the fact that the said source (65) of β radiation is slidable along the longitudinal axis of the said third cavity (3) for the determination of the number of particles deposited on the portion of the said filter (61) associated with a predetermined slot (57) of the said plate (11).

12. A device according to one of Claims from 1 to 7, characterised by the fact that a photometer (67) is fixed on one lateral wall of the said third cavity (13) by means of which it is possible to effect an optical reading of the number of particles which traverse the said slot (57) of the said plate (11).

13. A device according to Claim 12, characterised by the fact that in the said third cavity (3) and parallel to the said plate (11) but in a lower position than said plate and than the space of the said third cavity (3) with which the said photometer (67) is provided, there is disposed a second plate similar to the said plate (11) but on which is deposited a second filter.

14. A device according to Claim 13 characterised by the fact that the said second filter is made of a material resistant to high temperatures, such as, for example, glass fibre.

**Patentansprüche**

1. Vorrichtung fuer die Trennung von in der Luft schwebenden Teilchen nach Kornmessklassen, die folgendes um fasst:

—einen ersten Koerper (12), in dem sich ein L-foermiger Kanal (18) befindet, dessen erster Teil durch einen ersten Hohlraum (17) und dessen zweiter Teil (18) durch einen zweiten Hohlraum (16) bestimmt wird, der sich an der unteren Oberflaeche des ersten Koerpers (12) bildet; dieser erste Hohlraum (17) weist einen im wesentlichen rechteckigen Querschnitt auf, dessen zwei entgegengesetzte Seiten eine von oben nach unten abnehmende Laenge haben,

—einen zweiten Koerper (2), der eine obere Oberflaeche aufweist, die der unteren Oberflaeche des ersten Koerpers (12) entgegengesetzt und mit dieser in Beruehrung ist,

—einen dritten Hohlraum (3), der sich im zweiten Koerper (2) in Uebereinstimmung mit dem zweiten Hohlraum (16) befindet sowie Mittel, einen den im o.g. Kanal (18) herrschenden Druck unterschreitenden herzustellen,

—eine Leitung (41), die mit einer Teilchen mit sich bringenden Luftquelle verbunden ist und fuer die Einspritzung einer gewissen Menge dieser Luft ins Innere des ersten Hohlraums (17) in der Naehe des zweiten Hohlraums (16) entwickelt wurde; die besagte Leitung weist einen im wesentlichen rechteckigen Querschnitt auf, der sich durch die Tatsache auszeichnet, das er folgendes umfasst:

—eine rechteckige Platte (11), die vorzugsweise durch einen Klebstoff am Rand des dritten Hohlraums (3) befestigt wird und konzipiert wurde, um den unteren Teil des zweiten Hohlraums (16) zu begrenzen, zahlreiche durchkreuzende Oeffnungen (57), die sich auf der besagten Platte befinden (11) und deren obere Oberflaechen flach sind; die besagten Oeffnungen (57) weisen Laengsachsen auf, die parallel zueinander und lotrecht zur Laengsachse des ersten Hohlraums verlaufen, so dass die Fluessigkeit am Ausgang des ersten Teils des o.g. Kanals (18) jeweils auf eine ganze Oeffnung (57) trifft.

2. Vorrichtung gemaess Anspruch 1, gekennzeichnet durch die Tatsache, dass die obere Oberflache des Platte (11) koplanar mit der oberen Oberflaeche des zweiten Koerpers (2) ist.

3. Vorrichtung gemaess einem der vorausgegangenen Ansprueche, gekennzeichnet durch die Tatsache, dass die Laengsachse der o.g. Leitung (41) sich parallel zu der des ersten Hohlraums (17) verhaelt und in der Naehe der Seitenwand dieses Hohlraums liegt, die dem zweiten Hohlraum am naechsten ist (16).

4. Vorrichtung gemaess einem der vorausgegangenen Ansprueche, gekennzeichnet durch die Tatsache, dass der o.g. zweite Hohlraum (16) ein nicht sehr tiefes Prisma bildet.

5. Vorrichtung gemaess einem der vorausgegangenen Ansprueche, gekennzeichnet durch die Tatsache, dass der dritte Hohlraum (3) prismatisch ist und bei der Verwendung an eine Pumpe angeschlossen wird, die einen Unterdruck im Innern dieses Hohlraums schaffen soll.

6. Vorrichtung gemaess einem der vorausgegangenen Ansprueche, gekennzeichnet durch die Tatsache, dass die besagte Leitung (41) einen mittleren Teil (42) umfasst, der einen oberen Teil aufweist (43), in dem sich eine erste quer durchlaufende Oeffnung (48) befindet, deren Inneres durch eine Leitung (51) mit der besagten, teilchentragenden Luftquelle verbunden ist, und einen unteren Teil (44), der im wesentlichen U-foermig ist, damit die erste Oeffnung (48) sich in dem durch dieses U gebildeten Hohlraum oeffnet, wobei eine entsprechende Folie (46) am o.g. unteren Teil befestigt ist, so dass der Ausgangskanal fuer die teilchentragende Luft seitlich begrenzt wird.

7. Vorrichtung gemaess Anspruch 6, gekennzeichnet durch die Tatsache, dass am ersten Koerper (12), in Uebereinstimmung mit dem oberen aeusseren Ende des ersten Hohlraums (17) ein Abdichtungsverschluss (26) befestigt ist, der eine zweite Oeffnung (53) aufweist, durch die die besagte Leitung hervortritt, um mit der teilchentragenden Luftquelle verbunden werden zu koennen, und eine dritte Oeffnung (32), die den Sitz fuer ein Anschlussrohr (24) bildet, das das Innere des besagten Verschlusses (26) und folglich den ersten Hohlraum (17) mit der gefilterten Luftquelle verbindet.

8. Vorrichtung gemaess einem der vorausgegangenen Ansprueche, gekennzeichnet durch die Tatsache, dass die obere Oberflaeche der Platte (11) einen Filter (61) traegt, auf dem bei Anwendung die Teilchen abgelagert werden, und zwar gemaess ihrer verschiedenen Kornmessklassen.

9. Vorrichtung gemaess Anspruch 8, gekennzeichnet durch die Tatsache, dass der besagte Filter (61) vom Typ mit Membran ist, das heisst, er besteht aus einem poroesen Material, wie zum Beispiel Zellulose oder Tetrafluoraethylen.

10. Vorrichtung gemaess einem der Ansprueche 8 oder 9, gekennzeichnet durch die Tatsache, dass eine Strahlungsquelle ß sich im Inneren des dritten Hohlraums (3) befindet, ein Fuehlgeraet (66), zum Beispiel des Typs Oberflaechensperrdiode, sich am oberen Teil des zweiten Hohlraums (16) befindet, um bei Anwendung eine Bestimmung der auf dem besagten Filter (61) abgelagerten Teilchen in Realzeit zu erzielen.

11. Vorrichtung gemaess Anspruch 10, gekennzeichnet durch die Tatsache, dass die besagte Strahlungsquelle ß entlang der Laengsachse des dritten Hohlraums (3) verlaufen kann, und zwar feur die Bestimmung der Anzahl von Teilchen, die auf dem Teil des Filters (61) abgelagert sind, der zu einer vorbestimmten Oeffnung (57) der besagten Platte (11) gehoert.

12. Vorrichtung gemaess einem der Ansprueche von 1 bis 7, gekennzeichnet durch die Tatsache, dass ein Lichtmesser (67) an einer Seitenwand des dritten Hohlraums befestigt ist, mittels dessen eine optische Ablesung der Anzahl von Teilchen, die die besagte Oeffnung (57) der o.g. Platte (11) durchqueren, erzeigt werden kann.

13. Vorrichtung gemaess Anspruch 12, gekennzeichnet durch die Tatsache, dass im dritten Hohlraum (3) und parallel zur Platte (11), aber in einer niedrigeren Lage als die besagte Platte und der Raum des dritten Hohlraums, an dem der besagte Lichtmesser vorgesehen ist, eine zweite, der Platte (11) identische Platte angeordnet ist, auf die jedoch ein zweiter Filter montiert ist.

14. Vorrichtung gemaess Anspruch 13, gekennzeichnet durch die Tatsache, dass der zweite Filter aus einem hochwarmfesten Material wie zum Beispiel Glasfaser hergestellt wird.

**Revendications**

1. Dispositif pour la séparation de particules en suspension dans l'air suivant des classes de taille de grain, comprenant:

—un premier corps (12) dans lequel est formé un canal (18) sensiblement conformé en L ayant une première partie définie par une première cavité (17) et une seconde partie du canal (18) définie par une seconde cavité (16) formée sur la surface inférieure du premier corps (12), cette première cavité (17) ayant une section transversale sensiblement rectangulaire dont deux côtés opposés sont de longueur décroissante du haut vers le bas,

—un second corps (2) ayant une surface supérieure faisant face à et en contact avec la surface inférieure du premier corps (12),

—une troisième cavité (3) formée dans le second corps (2) en correspondance avec la seconde cavité (16) et des moyens pour créer une pression inférieure à celle qui règne dans ledit canal (18),

—une buse (41) reliée à une source d'air portant des particules et conçue pour injecter une quantité de cet air à l'intérieur de la première cavité (17) près de la seconde cavité (16), ladite buse ayant une section transversale sensiblement rectangulaire, et caractérisé en ce qu'il comprend:

—une plaque rectangulaire (11) fixée de préférence au moyen d'un adhésif sur le bord de la troisième cavité (3) et conçue pour délimiter la partie inférieure de la seconde cavité (16), plusieurs fentes traversantes (57) étant formées sur ladite plaque (11) et ayant leurs surfaces supérieures planes, lesdites fentes (57) ayant leurs axes longitudinaux parallèles les uns aux autres et perpendiculaires à l'axe longitudinal de la première cavité de manière que le fluide à la sortie de la première partie dudit canal (18) rencontre une fente entière (57) à un instant.

2. Dispositif selon la revendication 1, caractérisé en ce que la surface supérieure de la plaque (11) est copolanaire à la surface supérieure du second corps (2).

3. Dispositif selon l'une des revendications précédentes, caractérisé en ce que l'axe longitudinal de ladite buse (41) est parallèle à celui de la première cavité (17) et est proche de la paroi latérale de cette cavité qui est la plus proche de la seconde cavité (16).

4. Dispositif selon l'une des revendications précédentes, caractérisé en ce que ladite seconde cavité (16) est un prisme peu profond.

5. Dispositif selon l'une des revendications précédentes, caractérisé en ce que la troisième cavité (3) est prismatique, l'intérieur de cette troisième cavité (3) étant relié en service à une pompe conçue pour créer une dépression à l'intérieur de cette cavité.

6. Dispositif selon l'une des revendications précédentes, caractérisé en ce que ladite buse (41) comprend une pratie centrale (42) ayant une partie supérieure (43) dans laquelle est formé un premier trou traversant (48) dont l'intérieur est en communication par l'intermédiaire d'un conduit (51) avec ladite source d'air portant des particules et une partie inférieure (44) qui est sensiblement conformée en U de manière que le premier trou (48) ouvre dans la cavité définie par ce U, une lame respective (46) étant fixée sur ladite partie inférieure (44) de manière à déliminter latéralement le canal de sortie pour l'air portant les particules.

7. Dispositif selon la revendication 6, caractérisé en ce que sur le premier corps (12), en correspondance avec l'extrémité supérieure de la première cavité (17) est fixé un bouchon d'étanchéité (26) ayant un second trou (53) à travers lequel ledit conduit (51) fait saillie pour être relié avec la source d'air portant les particules, et un troisième trou (32) formant un siège pour un tuyau de liaison (24) adapté à mettre l'intérieur dudit bouchon (26) et par conséquent la première cavité (17) en communication avec la source d'air filtré.

8. Dispositif selon l'une des revendications précédentes, caractérisé en ce que la surface supérieure de la plaque (11) supporte un filtre (61) sur lequel, en service, les particules sont déposées selon leurs diverses classes de taille de grain.

9. Dispositif selon la revendication 8, caractérisé en ce que ledit filtre (61) est du type à membrane, c'est à dire du type formé d'un matériau poreux qui est par exemple de la cellulose ou du tétrafluoroéthylène.

10. Dispositif selon l'une des revendications 8 ou 9, caractérisé en ce qu'une source (65) de rayonnement β est logée à l'intérieur de la troisième cavité (3), un détecteur (66), par exemple du type diode à barrière de surface, étant situé sur la partie supérieure de la seconde cavité (16) pour obtenir, en service, une détermination en temps réel du nombre de particules qui sont déposées sur ledit filtre (61).

11. Dispositif selon la revendication 10, caractérisé en ce que ladite source (65) de rayonnement β est coulissable le long de l'axe longitudinal de la troisième cavité (3) pour la détermination du nombre de particules déposées sur la partie du filtre (61) associée à une fente prédéterminée (57) de ladite plaque (11).

12. Dispositif selon l'une des revendications 1 à 7, caractérisé en ce qu'un photomètre (67) est fixé sur une paroi latérale de la troisième cavité (13) et au moyen duquel il est possible de réaliser une lecture optique du nombre de particules qui traversent ladite fente (57) de ladite plaque (11).

13. Dispositif selon la revendication 12, caractérisé en ce que, dans la troisième cavité (3) et parallèlement à la plaque (11) mais dans une position plus basse que ladite plaque et que l'espace de la troisième cavité (3) avec lequel ledit photomètre (67) est prévu, est disposée une seconde plaque identique à la plaque (11) mais sur laquelle est déposée un second filtre.

14. Dispositif selon la revendication 13, caractérisé en ce que le second filtre est réalisé en matériau résistant aux températures élevées, tel que, par exemple, de la fibre de verre.

EP 0 159 648 B1

Fig.6

Fig.1

Fig.3

Fig.2

Fig.5

Fig.4